# EUROPÄISCHE PATENTSCHRIFT

(11) **EP 2 215 148 B1**
(45) Veröffentlichungstag und Bekanntmachung des Hinweises auf die Patenterteilung: **25.04.2012**
(21) Anmeldenummer: 08855449.8
(22) Anmeldetag: 11.11.2008
(51) Int. Cl.: C08G 77/388, D06M 15/643, C08L 83/10

(54) **QUATERNÄRE AMMONIUMGRUPPEN AUFWEISENDE ORGANOPOLYSILOXANE, DEREN HERSTELLUNG UND VERWENDUNG**
ORGANOPOLYSILOXANES COMPRISING QUATERNARY AMMONIUM GROUPS, THE PRODUCTION AND USE THEREOF
ORGANOPOLYSILOXANE PRÉSENTANT DES GROUPES D'AMMONIUM QUATERNAIRE, LEUR PRODUCTION ET LEUR UTILISATION

(30) Priorität: 26.11.2007 DE 102007047863
(43) Veröffentlichungstag der Anmeldung: 11.08.2010
(73) Patentinhaber: Wacker Chemie AG, 81737 München (DE)
(72) Erfinder: HERZIG, Christian, 83329 Waging (DE); DORMEIER, Siegfried, 94166 Stubenberg (DE); HELLER, Anton, 84359 Simbach (DE)
(74) Vertreter: Deffner-Lehner, Maria
(86) Internationale Anmeldenummer: PCT/EP2008/065328
(87) Internationale Veröffentlichungsnummer: WO 2009/068435

(56) Entgegenhaltungen:
- EP-A- 1 288 246
- EP-A- 1 561 770
- DE-A1-102005 012 410

## Beschreibung

Die Erfindung betrifft quaternäre Ammoniumgruppen aufweisende Organopolysiloxane und deren Herstellung und Verwendung.

US 3,389,160 (korrespondierende DE 1 493 384 B) beschreibt Siloxane mit lateralen quaternären Ammoniumgruppen, die durch die Umsetzung von entsprechenden Epoxialkylsiloxanen mit sekundären Aminen und nachfolgender Quaternisierung der erhaltenen tert. Amingruppen mit Alkylierungsmitteln wie Methylchlorid hergestellt werden können.

In US 4,895,964 wird eine Weiterentwicklung des in US 3,389,160 beschriebenen Verfahrens beschrieben, in dem statt des sekundären Amins ein Salz eines tertiären Amins zur Umsetzung des Epoxisiloxans verwendet wird und zusätzlich eine katalytische Menge eines freien tertiären Amins zugegeben wird, wobei diese katalytische Menge ein Verhältnis von 0,0005 : 1 bis 0,05 : 1 freies tert. Amin-Äquivalent zu tert. Ammoniumsalz-Äquivalent hat. Das Herstellverfahren erfordert damit den Einsatz zweier Reagenzien: tert. Ammoniumsalz und freies Amin. Würde man, wie sonst aus Gründen der besseren Dispergierbarkeit, das Ammoniumsalz intermediär herstellen, indem erst das Amin und dann die Säure zudosiert werden, ist bei den geforderten geringen Konzentrationen an freiem Amin eine sehr genaue Säuredosierung notwendig, die in industrieller Praxis kaum eingehalten werden kann.

Verzweigte Organopolysiloxane mit quaternären Ammoniumgruppen sind in EP 1 561 770 A offenbart. Die erfindungsgemäßen verzweigten Quatsiloxane werden erhalten durch Kombination von Siloxanen mit lateralen Epoxygruppen und α,ω-Epoxysiloxanen mit tert. Mono- und Diaminen. Diese komplizierte Multikomponententechnik erfordert eine sehr genaue Feinabstimmung der Eduktmengen und erlaubt nur geringe Toleranz der Qualität des lateralen Epoxysiloxans bezüglich Anzahl und Konzentration seiner Epoxygruppen. Die Produkte sind frei von Epoxygruppen, da gemäß Absatz [0038] der EP 1 561 770 A der betreffende organische Rest E so definiert ist, dass er genau ein quaternäres Stickstoffatom trägt.

Es bestand die Aufgabe quaternäre Ammoniumgruppen aufweisende Organopolysiloxane bereitzustellen, die geeignet sind, faserartige Substrate, wie natürliche oder künstliche Substrate mit Faserstruktur, insbesondere textile Flächengebilde, weich und gleichzeitig hydrophil auszurüsten.

Weiterhin bestand die Aufgabe ein Verfahren zur Behandlung, insbesondere Beschichtung oder Imprägnierung, von faserartigen Substraten, insbesondere textilen Flächengebilden, bereitzustellen, bei dem durch die Behandlung auch eine gute Permanenz der Ausrüstung, wie weicher Griff und Hydrophilie, erzielt wird. Die Aufgabe wird durch die Erfindung gelöst.

Gegenstand der Erfindung sind quaternäre Ammoniumgruppen aufweisende Organopolysiloxane enthaltend Einheiten der allgemeinen Formel

QRₐSiO₍₃₋ₐ₎/2 (I),

ER_{b}SiO_{(3-b)/2} (II)

und

R_{c}SiO _{(4-c)/2} (III),

wobei
R gleich oder verschieden ist und einen einwertigen, gegebenenfalls halogenierten Kohlenwasserstoffrest mit 1 bis 18 Kohlenstoffatomen bedeutet,
E einen einwertigen SiC-gebundenen organischen Rest mit 3 bis 18 Kohlenstoffatomen, der eine Epoxygruppe enthält, bedeutet,
Q einen einwertigen SiC-gebundenen organischen Rest bedeutet, in dem eine quaternäre Ammoniumgruppe über eine ringgeöffnete Epoxygruppe an ein Siliciumatom gebunden ist,
a gleich 0, 1 oder 2 ist,
b gleich 0, 1 oder 2 ist und
c gleich 0, 1, 2 oder 3 ist,
mit der Maßgabe, dass die Siloxane (1) jeweils mindestens eine Einheit der Formel (I) und (II) enthalten und das Verhältnis der Reste Q/E durchschnittlich im Bereich von 0,2 bis 100, vorzugsweise 0,5 bis 20, bevorzugt 1 bis 10, liegt.

Gegenstand der Erfindung ist weiterhin ein Verfahren zur Herstellung der quaternäre Ammoniumgruppen aufweisenden Organopolysiloxane
durch Umsetzung von Epoxygruppen aufweisenden
Organopolysiloxanen (1) enthaltend Einheiten der Formel (II) und (III)

ER_{b}SiO_{(3-b)/2} (II)

und

R_{c}SiO _{(4-c)/2} (III),

wobei R, E, b und c die oben dafür angegebene Bedeutung haben, mit tertiären Aminen (2), die mindestens eine Struktureinheit der allgemeinen Formel

R¹₂N- (IV)

enthalten, wobei R¹ ein Alkylrest mit 1 bis 6 Kohlenstoffatomen bedeutet,
mit der Maßgabe, dass die Summe aller Struktureinheiten der Formel (IV) kleiner ist als die Summe aller Einheiten der Formel (II) und
dass die molare Menge der zur Neutralisation des Reaktionsgemisches eingesetzten Säuren (3) gleich oder größer der molaren Menge an basischen Struktureinheiten (IV) der Amine (2) ist.

Die erfindungsgemäßen Organopolysiloxane können lineare, verzweigte, cyclische oder auch harzartige Strukturen mit einer Vielzahl von tri- oder/und tetrafunktionellen Siloxaneinheiten aufweisen. Die Organopolysiloxane weisen vorzugsweise mindestens drei Siloxaneinheiten, bevorzugt mindestens zehn Siloxaneinheiten pro Molekül auf.

Bevorzugt sind als quaternäre Ammoniumgruppen aufweisende Organopolysiloxane solche der allgemeinen Formel

A_{d}R_{3-d}SiO (SiR₂O)ₒ(SiRAO)ₚSiR_{3-d}A_{d} (V)

wobei A einen Rest E oder Q bedeutet, wobei das Verhältnis der Reste Q/E durchschnittlich im Bereich von 0,2 bis 100 liegt,
d gleich 0 oder 1, vorzugsweise 0, ist
o gleich 0 oder eine ganze Zahl von 1 bis 3000, vorzugsweise 10 bis 1000, ist und
p gleich eine ganze Zahl von 2 bis 100, vorzugsweise 2 bis 20 ist.

Die erfindungsgemäßen Organopolysiloxane weisen vorzugsweise eine Viskosität von 50 bis 500 000 mPa·s (25 °C), bevorzugt von 200 bis 50 000 mPa·s (25 °C), auf.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für halogenierte Reste R sind Halogenalkylreste, wie der 3,3,3-Trifluor-n-propylrest, der 2,2,2,2',2',2'-Hexafluorisopropylrest und der Heptafluorisopropylrest und Halogenarylreste; wie der o-, m- und p-Chlorphenylrest.

Beispiele für Alkylreste R¹ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest,
wobei der Methyl- und Ethylrest bevorzugt ist und der Methylrest besonders bevorzugt ist.

Die Reste E sind vorzugsweise solche der Formel 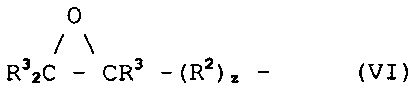 oder 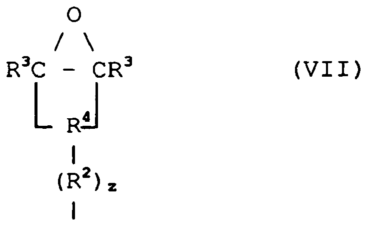 wobei
R² ein zweiwertiger Kohlenwasserstoffrest mit 1 bis 10 Kohlenstoffatomen je Rest ist, der durch ein
Ethersauerstoffatom unterbrochen sein kann,
R³ ein Wasserstoffatom oder ein einwertiger
Kohlenwasserstoffrest mit 1 bis 10 Kohlenstoffatomen je Rest ist, der durch ein Ethersauerstoffatom unterbrochen sein kann, R⁴ einen dreiwertigen Kohlenwasserstoffrest mit 3 bis 12 Kohlenstoffatomen je Rest ist und
z 0 oder 1 ist.

Beispiele für Reste E sind
Glycidoxypropyl-,
3,4-Epoxycyclohexylethyl-,
2-(3,4-Epoxy-4-methylcyclohexyl)-2-methylethyl-,
3,4-Epoxybutyl-,
5,6-Epoxyhexyl-,
7,8-Epoxydecyl-,
11,12-Epoxydodecyl- und
13,14-Epoxytetradecyl-rest.

Bei dem erfindungsgemäßen Verfahren werden vorzugsweise Organopolysiloxane (1) der allgemeinen Formel

E_{d}R_{3-d}SiO(SiR₂O)ₒ(SIREO)ₚSiR_{3-d}E_{d} (VIII),

wobei E, d, o und p die oben dafür angegebene Bedeutung haben, eingesetzt.

Die tertiären Amine (2), die mit den Epoxysiloxanen (1) zur Reaktion gebracht werden, enthalten bevorzugt 1 bis 3 Struktureinheiten der allgemeinen Formel (IV), besonders bevorzugt 1 oder 2 solcher Struktureinheiten. Es liegt in der Natur der Reaktion von tertiären Aminen (2) mit Epoxysiloxanen (1) in Gegenwart von Säuren (3), dass die Aminogruppen der Formel (IV) vollständig in quaternäre Ammoniumgruppen umgewandelt werden. Die molare Menge der in der Summe der Q-Reste enthaltenen quaternären Stickstoffatome entspricht daher nach Abschluss der Umsetzung der molaren Menge der eingesetzten Struktureinheiten R¹₂N- .

Beispiele für Struktureinheiten der allgemeinen Formel (IV) sind der Dimethylamino-, Diethylamino-, Ethylmethylamino-, Dipropylamino- und der Butylmethylaminorest, wobei der Dimethylamino- und Diethylaminorest bevorzugt sind, besonders bevorzugt ist der Dimethylaminorest.

Vorzugsweise werden tertiäre Amine (2) der allgemeinen Formel

R¹₂N-B

eingesetzt, wobei
B einen Rest R⁵ oder einen Rest der Formel -[Z-NR¹]ₛ-Z-NR¹₂ bedeutet,
wobei R⁵ ein Alkylrest mit 1 bis 18 C-Atomen bedeutet, der durch einen Carbinolrest, Amidrest, Hydroxyalkylamidrest, Hydroxyalkylaminrest oder Säurerest substituiert sein kann,
Z ein zweiwertiger Kohlenwasserstoffrest mit 1 bis 18 C-Atomen der durch ein Ethersauerstoffatom unterbrochen sein kann,
s gleich 0 ist oder eine ganze Zahl von 1 bis 6 ist, vorzugsweise 0, 1 oder 2 ist.

Beispiele für tertiäre Amine (2) sind daher Dimethylethylamin, Dimethylpropylamin, Dimethylbutylamin, Dimethylhexylamin, Dimethyloctylamin, Dimethyldecylamin, Dimethyldodecylamin, Dimethyltetradecylamin, Dimethylhexadecylamin, Dimethyloctadecylamin, Dimethylbenzylamin, Dimethylanilin, Dimethylkokosamin, Dimethylmyristylamin, Dimethylstearylamin, Ethylmethyloctylamin, Diethyldodecylamin, Diethylstearylamin, Dimethylaminopropylacetamid, Dimethylaminopropylkokosamid, Dimethylaminopropylstearylamid, Dimethylethanolamin,
sowie höher funktionelle tertiäre Amine, wie
Tetramethylpropylendiamin, Tetramethylhexamethylendiamin, Bis-(2-dimethylaminoethyl)ether, Pentamethyldiethylentriamin, Pentamethyldipropylentriamin, Tris (2-dimethylaminoethyl)amin und Tris(2-dimethylaminopropyl)amin.

Als Säuren (3) können anorganische oder organische Säuren HX eingesetzt werden.

Beispiele für Säuren (3) sind Ameisensäure, Essigsäure, Propionsäure, 2-Ethylhexansäure, Laurylsäure, Palmitinsäure, Stearinsäure, Benzoesäure, Methansulfonsäure, Toluolsulfonsäure, Schwefelsäure, Chlorwasserstoffsäure, Bromwasserstoffsäure, Ethanphosphonsäure, Phosphorsäure.

Bei dem erfindungsgemäßen Verfahren werden tertiäre Amine (2) vorzugsweise in Mengen von 0,15 bis 0,99 Mol, bevorzugt 0,3 bis 0,9 Mol, Struktureinheit (IV) je Mol Epoxygruppe in den Organopolysiloxanen (1) eingesetzt.

Das erfindungsgemäße Verfahren wird in Gegenwart von anorganischen oder organischen Säuren HX hergestellt. Die Säuren HX werden dabei in Mengen von vorzugsweise 1 bis 2 Mol, bevorzugt 1 bis 1,5 Mol, jeweils bezogen auf 1 Mol basische Struktureinheiten (IV) in den tertiären Aminen (2), eingesetzt.

Beispiele für Reste Q sind 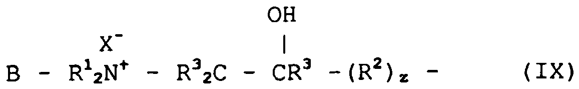 oder 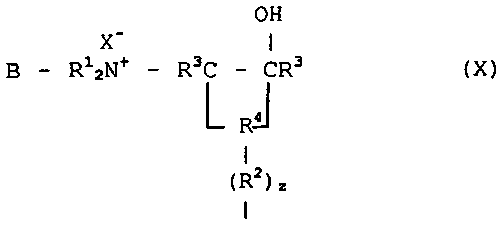 wobei X⁻ das Gegenion zu der positiven Ladung an der quaternierten Stickstoffgruppe ausgewählt aus Anionen von anorganischen oder organischen Säuren HX bedeutet und R¹, R², R³, R⁴, B und z die oben dafür angegebene Bedeutung haben.

Die Konzentrationen an quaternärem Stickstoff in den erfindungsgemäßen Organopolysiloxanen liegen im Bereich von vorzugsweise 0,02 bis ca. 1,0 mEquiv./g, bevorzugt 0,05 bis 0,50 mEquiv./g und besonders bevorzugt 0,10 bis 0,30 mEquiv./g. Dem entsprechend sind die Konzentrationen von Epoxygruppen in den erfindungsgemäßen Organopolysiloxanen im Bereich von vorzugsweise 0,005 bis ca. 1,0 mEquiv./g, bevorzugt 0,02 bis ca. 0,5 mEquiv./g und besonders bevorzugt 0,04 bis ca. 0,3 mEquiv./g.

Die erfindungsgemäßen Organopolysiloxane können bei genügend hoher Konzentration an quaternärem Stickstoff (üblicherweise größer 0,2 mEquiv./g) in selbstdispergierender wässriger Formulierung verwendet werden. Zur einfacheren Handhabung empfiehlt sich hierfür die Abmischung mit Verdünnungsmitteln, wie Alkoholen, Diolen bzw. deren Alkoxylaten.

Alternativ wird speziell bei niedriger Konzentration an quaternärem Stickstoff (< 0,2 mEquiv./g) die Emulgierung zu wässrigen Formulierungen mittels handelsüblicher Emulgatoren bevorzugt.

Die wässrigen Lösungen oder Emulsionen enthalten vorzugsweise 10 bis 60, bevorzugt 20 bis 50 Gew.-% der erfindungsgemäßen Organopolysiloxane.

Gegenstand der Erfindung sind Formulierungen enthaltend
(A) mindestens zwei Aminogruppen aufweisende Polyaminoverbindungen und
(B) erfindungsgemäße quaternäre Ammoniumgruppen aufweisende Organopolysiloxane.

Vorzugsweise werden die Verbindungen (A) und (B) in den Formulierungen in Form von wässrigen Lösungen oder Emulsionen eingesetzt.

Die Behandlung der faserartigen Substrate, vorzugsweise textilen Flächengebilden, erfolgt vorzugsweise mit einer Kombination der Verbindungen (A) und (B) und kann in zwei verschiedenen Verfahrensvarianten erfolgen.

Vorzugsweise erfolgt die Behandlung der faserartigen Substrate mit den erfindungsgemäßen Formulierungen, indem vor der Behandlung Mischungen aus Verbindungen (A) und (B) hergestellt werden.

In einer weiteren Verfahrensvariante erfolgt die Behandlung mit einer Kombination der Verbindungen (A) und (B) in der Art, dass die Behandlung zuerst mit Verbindungen (A) und dann anschließend die Behandlung mit Verbindungen (B) erfolgt.

Der Begriff faserartige Substrate soll im Rahmen der vorliegenden Erfindung alle natürlichen oder künstlichen Substrate mit Faserstruktur umfassen.

Der Begriff Behandlung faserartiger Substrate soll im Rahmen der vorliegenden Erfindung die Beschichtung oder Imprägnierung faserartiger Substrate, um ihre Eigenschaften in gewünschter Weise zu verändern, umfassen, beispielsweise sollen die faserartigen Substrate weich und hydrophil ausgerüstet werden. Die bei dem erfindungsgemäßen Verfahren eingesetzten Verbindungen (A) können monomeren, oligomeren oder polymeren Charakter haben. Vorzugsweise sind die Verbindungen (A) Sifreie, organische Polyaminoverbindungen. Die Verbindungen (A) enthalten vorzugsweise mindestens 2 primäre Aminogruppen.

Die Verbindungen (A) enthalten vorzugsweise 5 bis 5000 Aminogruppen (-NH₂), bevorzugt 10 bis 1000 Aminogruppen (-NH₂), besonders bevorzugt 20 bis 200 Aminogruppen (-NH₂). Die Verbindungen (A) enthalten vorzugsweise primäre Aminogruppen, können aber neben primären Aminogruppen auch sekundäre oder tertiäre Aminogruppen enthalten.

Die Konzentration an Aminogruppen in Verbindungen (A) beträgt vorzugsweise 1 bis 20 mEqu./g, bevorzugt 4 bis 20 mEqu./g (mEqu./g = mÄquivalent pro g Substanz = Äquivalent pro kg Substanz).

Beispiele für Polyaminoverbindungen (A) sind teil- oder vollhydrolysierte Polymerisate von Vinylformamid, lineare oder verzweigte Ethyleniminpolymerisate und Kondensationsprodukte aus Diethylentriamin und Homologen mit Dicarbonsäuren, wie Bernsteinsäure, Glutarsäure, Adipinsäure und Sebacinsäure.

In den erfindungsgemäßen Formulierungen bzw. in dem Verfahren zur Behandlung der organischen Fasern, vorzugsweise textilen Flächengebilden, werden die Verbindungen (A) in Mengen von vorzugsweise 0,1 bis 10 Mol Aminogruppe, bevorzugt 0,3 bis 3 Mol Aminogruppe, bezogen jeweils auf 1 Mol Epoxygruppen in Verbindungen (B), eingesetzt.

Die erfindungsgemäßen quaternären Ammoniumgruppen aufweisenden Organopolysiloxane können zur Behandlung von textilen Flächengebilden, Textilfasern und Leder, als Additive in Beschichtungen und Lacken, als Zusätze in kosmetischen Formulierungen und als oberflächenaktive Mittel verwendet werden. Sie weisen insbesondere hervorragende Eigenschaften als Textilweichmacher auf, die denen von polyglykolhaltigen Siliconweichmachern in Weichgriff und Waschpermanenz weit überlegen sind.

Auf Grund ihrer Kationogenität haften die erfindungsgemäßen quaternären Ammoniumgruppen aufweisenden Organopolysiloxane sehr gut auf Substraten wie Textilien oder Papier und zeichnen sich durch ihre für Organosiliciumverbindungen vergleichsweise hohe Hydrophilie bei gleichzeitig herausragender Griffverbesserung aus. Im Vergleich zu dem Stand der Technik entsprechenden aminofunktionellen, glykolfunktionellen, amidofunktionellen und aminoglykolfunktionellen Appreturprodukten zeichnen sich die erfindungsgemäßen Organopolysiloxane durch verbesserte Ausziehfähigkeit, Permanenz gegenüber Wäschen und chemischer Reinigung, Stabilität gegenüber Scherkräften und pH-Änderungen und die Möglichkeit synergistische Formulierungen herzustellen aus.

Die erfindungsgemäßen Organopolysiloxane können daher z. B. als Bestandteile von Emulsionen, in Lösung oder in Substanz der Behandlung von textilen Flächengebilden, wie z. B. Geweben, Maschenwaren oder Vliesen, der Textilfaser- und Garnpräparation und -modifikation sowie der Leder- und Papierbehandlung dienen. Durch die Ausrüstung oder Modifikation mit den erfindungsgemäßen quaternären Ammoniumgruppen aufweisenden Organopolysiloxanen können gewünschte Eigenschaften wie z.B. ein weicher, fließender Griff, verbesserte Elastizität, antistatische Eigenschaften, Farbvertiefung, Reibwerte, Oberflächenglätte, Glanz, Knittererholung, Farbechtheiten, Waschbeständigkeit, Hydrophilie, Weiterreissfestigkeit, verringerte Pillingneigung, "Easy-Care" und "Soil-Release" Eigenschaften, sowie verbesserter Tragekomfort verliehen werden. Weiterhin können durch die Ausrüstung oder Modifikation von textilen Flächengebilden, Fasern, Garnen, Papier und Leder mit den erfindungsgemäßen Organopolysiloxanen die industrielle Verarbeitbarkeit, wie z.B. die Verarbeitungs- und Produktionsgeschwindigkeit, Korrekturmöglichkeiten sowie die Qualität der Materialien verbessert werden.

Die textilen Flächengebilde, Fasern und Garne können gefertigt sein aus Mineralfasern, wie Glasfasern oder Silikatfasern, Naturfasern wie z.B. Wolle, Seide oder Baumwolle, Kunstfasern, wie z.B. Polyester-, Polypropylen- oder Polyamidfasern, Cellulosefasern, Mischpolymerfasern oder Metallfasern. Filamentfasern oder Stapelfasern aus den genannten Substraten können ebenfalls eingesetzt werden. Des weiteren können auch Flächengebilde aus Fasermischungen, wie z.B. Baumwolle/Polyester, Papier sowie natürliche Flächengebilde, wie Leder, verwendet werden.

Die Ausrüstung, Beschichtung oder Imprägnierung kann im Rakelverfahren, Tauch (Quetsch) (Dip)-Verfahren, Extrusionsverfahren, Spritz-Beflockungs- oder Sprühverfahren, Foulard-, Auszieh- oder Tauch-Schleuder-Verfahren aufgebracht werden. Auch sind alle Arten von Rollenbeschichtungen, wie Gravurwalzen, Pflatschen oder Auftrag über Mehrwalzensysteme, sowie Druck, z.B. (Rotary) Siebdruck, möglich. Des weiteren kann die Ausrüstung oder Beschichtung durch Schaumauftrag und nachträgliches Kalandrieren, mit einem Kalander oder Schmelzkalander erfolgen.

Des weiteren können die erfindungsgemäßen quaternären Ammoniumgruppen aufweisenden Organopolysiloxane als Additive in Beschichtungen und Lacken Einsatz finden. Zusätze der erfindungsgemäßen Organopolysiloxane zu z. B. strahlungs- oder additionshärtenden Lacken führen zur Verringerung der Oberflächenrauhigkeit und somit zu einer Verringerung des Gleitwiderstands des Lacks.

Weiterhin können die erfindungsgemäßen quaternären Ammoniumgruppen aufweisenden Organopolysiloxane als Zusätze in kosmetischen Formulierungen, beispielsweise als Konditionierer in Haarwaschmitteln, und als Bautenschutzmittel dienen.

Zusätzlich stellen die erfindungsgemäßen quaternäre Ammoniumgruppen aufweisenden Organopolysiloxane oberflächenaktive Mittel dar und können als Detergentien, Tenside, Emulgatoren, Entschäumer und Schaumstabilisatoren eingesetzt werden.

### Herstellungsbeispiele:

### Beispiel 1:

254 g eines linearen Polydimethylsiloxans mit einer Viskosität von 82 mPa.s (25°C) mit Glycidoxypropylendgruppen in einer Konzentration von 0,49 mEquiv./g werden bei 25°C mit 6,64 g Bis-(2-dimethylamino-ethyl)ether und 7,5 g Essigsäure vermischt und auf 80°C erwärmt. Das Reaktionsgemisch wird nach 20 Minuten klar, nach weiteren 4 Stunden wird abgekühlt. Das ¹H-NMR-Spektrum beweist, dass die tert. Aminogruppen quantitativ quaternisiert sind. Durch Kettenverlängerung zu einem Polyquatsiloxan mit Glycidoxypropylendgruppen hat sich die Viskosität des eingesetzten Siloxans auf 20 400 mPa.s (25°C) mehr als verhundertfacht. Das erhaltene ölige Polymer enthält eine Konzentration an quaternärem Stickstoff von 0,31 mEquiv./g und hat ein Verhältnis von Quat- zu Epoxygruppen von 2,02.

### Beispiel 2:

200 g eines Polysiloxans bestehend aus
Glycidoxypropylmethylsiloxy-, Dimethylsiloxy- und Trimethylsiloxyeinheiten mit einer Viskosität von 350 mm²/s (25°C) und einem Epoxygehalt von 0,251 mEquiv./g werden mit 4,24 g Dimethylbutylamin und 3,8 g Essigsäure vermischt und 5 Stunden auf 80°C erwärmt. Im Reaktionsgemisch ist kein freies Amin mehr nachweisbar; die Viskosität ist auf 2470 mm²/s (25°C) gestiegen. Das Siliconöl enthält eine Konzentration an quaternärem Stickstoff von 0,20 mEquiv./g und hat ein Verhältnis von Quat- zu Epoxygruppen von 5,2.

### Beispiel 3:

200 g des Epoxysiloxans aus Beispiel 2 mit einem Epoxygehalt von 0,251 mEquiv./g werden mit 1,52 g Dimethylbutylamin, 1,60 g Bis-(2-dimethylaminoethyl)ether und 3,2 g Essigsäure vermischt und auf 80°C erwärmt. Nach 30 Minuten wird die Mischung klar, worauf man sie weitere 3 Stunden auf gleicher Temperatur hält und kein freies Amin mehr nachweisbar ist. Man erhält ein über organische Quatgruppen verbrücktes und damit hochviskoses Polysiloxan mit einem Gehalt an quaternärem Stickstoff von 0,17 mEquiv./g und einem Verhältnis von Quat- zu Epoxygruppen von 2, 3.

### Beispiel 4:

200 g des Epoxysiloxans aus Beispiel 2 mit einem Epoxygehalt von 0,251 mEquiv./g werden mit 1,60 g Bis-(2-dimethylaminoethyl)ether und 1,8 g Essigsäure ohne weiteren Zusatz von monotert. Amin vermischt und auf 80°C erwärmt. Das nur schwach trübe Reaktionsgemisch ist nach 10 Minuten klar, nach weiteren 4 Stunden ist kein freies Amin mehr nachweisbar. Das erhaltene hochviskose Polysiloxan ist über organische Quatgruppen verbrückt und hat ein Verhältnis von Quat- zu Epoxygruppen von 0,66.

Vergleichsversuch 1:
Das Beispiel 1 wird mit denselben Einsatzstoffen wiederholt,
aber mit der Abänderung, dass mit einem Aminüberschuss alle Epoxygruppen des Siloxans umgesetzt werden. Es werden daher statt 6,64 g nun 14,88 g des bifunktionellen tert. Amins und
mit 11,2 g auch entsprechend mehr Essigsäure eingesetzt. Der Ansatz wird 3,5 Stunden auf 80°C gehalten, worauf keine Epoxygruppen mehr nachweisbar sind. Der Gehalt an freiem Diamin beträgt 4600 ppm.

Das hochviskose Siloxanpolymer enthält quaternären Stickstoff in einer Konzentration von 0,46 mEquiv./g und hat ein Verhältnis von Quat- zu Epoxygruppen von über 1000.

Vergleichsversuch 2:
Das Beispiel 2 wird mit denselben Einsatzstoffen wiederholt,
aber mit der Abänderung, dass mit einem geringen Aminüberschuss alle Epoxygruppen des Siloxans umgesetzt werden. Die Menge des eingemischten Dimethylbutylamins wird daher von 4,24 g auf 5,60 g erhöht, die der Essigsäure von 3,8 auf 4,5 g. Der 5-stündige Ringöffnungsprozess bei 80°C ergibt quantitativen Umsatz der Epoxygruppen und eine erhöhte Ölviskosität von 4260 mm²/s (25°C). Das erhaltene Polymer hat eine Konzentration von quaternärem Stickstoff von 0,24 mEquiv./g und 2400 ppm an freiem Dimethylbutylamin. Das Verhältnis von Quat- zu Epoxygruppen beträgt mehr als 1000.

Vergleichsversuch 3:
Das Beispiel 3 wird wiederum mit denselben Einsatzstoffen wiederholt, aber mit der Abänderung, dass die Summe der Amine gegenüber den Epoxygruppen im Überschuss eingesetzt wird. Bei Beibehaltung der Menge des bifunktionellen tert. Amins von 1,60 g wird die Einsatzmenge des Dimethylbutylamins von 1,52 auf 3,55 g erhöht, die der Essigsäure von 3,2 auf 5,0 g. Nach 5 Stunden bei 80°C sind keine Epoxygruppen mehr nachweisbar. Das über organische Gruppen verbrückte hochviskose Öl enthält 2200 ppm freies Dimethylbutylamin und eine Quatgruppenkonzentration von 0,24 mEquiv./g. Das Verhältnis von Quat- zu Epoxygruppen beträgt mehr als 1000.

### Verwendungsbeispiele:

### Mikroemulsion:

Die Anwendungstests auf Weichgriff, Hydrophobie sowie Permanenz erfolgten mit durch wässrige Applikation ausgerüsteten Baumwollmustern. Hierzu wurden aus allen Beispielpolymeren Mikroemulsionen hergestellt, deren Standardformulierung die folgenden Rohstoffmengen enthält:

| | |
|---|---|
| 66,8 g | Siloxanpolymer |
| 10,0 g | Butyldiglycol |
| 22,2 g | Isotridecylethoxylat (HLB-Wert: 10,5) |
| 2,0 g | Marlipal ST 1618 |
| 233,0 g | Wasser |

Die Mikroemulsionen enthalten jeweils 20,0 % Wirkstoff.

### Foulardverfahren mit den Beispielen 1-4 und Vergleichsversuchen 1-3:

Die erfindungsgemäßen und auch nicht erfindungsgemäßen quaternären Ammoniumgruppen aufweisenden Organopolysiloxane aus den Beispielen 1 bis 4 und den Vergleichsversuchen 1 bis 3 wurden folgendermaßen auf textile Flächengebilde aufgebracht:
Verwendet wurde eine gebleichte, unausgerüstete Maschenware 100 % CO Cretonne mit einem Flächengewicht von 230 g/m² sowie eine unausgerüstete Frottierware 100% CO mit einem Flächengewicht von 460 g/m². Als Referenz diente eine mit vollentsalztem Wasser geklotzte und getrocknete Ware.

Der Stoff wurde jeweils in eine wässrige Flotte, die 30 g der genannten Mikroemulsion pro Liter enthielt, getaucht. Bei Bedarf wurde der pH Wert der Flotte vorher mit Essigsäure auf 5 eingestellt. Der getränkte Stoff wurde mit einem Zweiwalzenfoulard auf 70 % Flottenaufnahme abgequetscht, aufgespannt und in einem Mathis-Laborspannrahmen bei 150°C 5 Minuten getrocknet. Anschließend wurde die Ware mindestens 12 Stunden im Klimaraum bei 23°C und 60 % Luftfeuchtigkeit klimatisiert. Die Nummerierung der Ausrüstungsbeispiele ist gleich der Nummerierung der Herstellungsbeispiele.

### Beispiel 5: Foulardverfahren mit einer Kombination von Verbindungen (A) und (B)

Eine gebleichte, unausgerüstete Maschenware 100 % CO Cretonne mit einem Flächengewicht von 230 g/m² sowie eine unausgerüstete Frottierware 100% CO mit einem Flächengewicht von 460 g/m² wurden jeweils in eine wässrige Verdünnung aus 1,93 g Lupamin® 9095 (Verbindung (A)), erhältlich von der Firma BASF, und 998 g vollentsalztes Wasser getaucht, wobei der pH-Wert dieser Flotten mit Essigsäure vorher auf etwa 5 eingestellt wurde. Bei Lupamin® 9095 handelt es sich um eine 20 %-ige Lösung eines hochmolekularen Polyvinylamins (MW ca. 340.000 g/mol) in Wasser. Der getränkte Stoff wurde mit einem Zweiwalzenfoulard auf 70 % Flottenaufnahme abgequetscht, aufgespannt und in einem Mathis-Laborspannrahmen bei 150°C 5 min getrocknet. Anschließend wurde dieser vorbehandelte Stoff in eine wässrige Flotte, die 30 g pro Liter der erfindungsgemäßen Mikroemulsion (Verbindung (B)), deren Herstellung oben in Beispiel 4 beschrieben ist, enthielt, getaucht. Der getränkte Stoff wurde wiederum mit einem Zweiwalzenfoulard auf 70 % Flottenaufnahme abgequetscht, aufgespannt und in einem Mathis-Laborspannrahmen bei 150°C 5 min getrocknet. Auf den Textilien lag somit ein Verhältnis von Aminogruppen aus der Vorbehandlung zu Epoxygruppen aus der Ausrüstung von 10 : 1 vor. Anschließend wurde die Ware mindestens 12 Stunden im Klimaraum bei 23°C und 60 % Luftfeuchtigkeit klimatisiert.

### Beispiel 6: Foulardverfahren mit einer Mischung von Verbindungen (A) und (B)

Eine Flotte wurde durch Mischen von 1,93 g Lupamin® 9095 (Verbindung (A)), 30 g der erfindungsgemäßen Mikroemulsion (Verbindung (B)), deren Herstellung oben in Beispiel 4 beschrieben ist, und 968 g vollentsalztem Wasser hergestellt und mit Essigsäure auf einen pH-Wert von etwa 5 eingestellt. In dieser Mischung lag somit ein Verhältnis von Aminogruppen zu Epoxygruppen von 10 : 1 vor.

Eine gebleichte, unausgerüstete Maschenware 100 % CO Cretonne mit einem Flächengewicht von 230 g/m² sowie eine unausgerüstete Frottierware 100% CO mit einem Flächengewicht von 460 g/m² wurden jeweils in diese Flotte getaucht. Der getränkte Stoff wurde mit einem Zweiwalzenfoulard auf 70 % Flottenaufnahme abgequetscht, aufgespannt und in einem Mathis-Laborspannrahmen bei 150°C 5 min getrocknet. Anschließend wurde die Ware mindestens 12 Stunden im Klimaraum bei 23°C und 60 % Luftfeuchtigkeit klimatisiert.

Nach der Klimatisierung der ausgerüsteten Stoffe - ausgerüstet jeweils mit den erfindungsgemäßen Organopolysiloxanen (B) gemäß den Beispielen 1 bis 4, mit der Kombination bzw. Mischung der erfindungsgemäßen Verbindungen (A) und (B) gemäß den Beispielen 5 und 6 und mit den nicht erfindungsgemäßen Verbindungen gemäß den Vergleichsversuchen 1 bis 3 - erfolgte die Bestimmung der Tropfeneinsinkzeit und des Weichgriffvergleichs vor der Wäsche. Für die Untersuchung der Waschechtheiten wurden alle ausgerüsteten Textilien zusammen mit ca. 3 kg Ballaststoff in einer Haushaltswaschmaschine der Marke SIWAMAT 6143 von Siemens mit dem Buntwäscheprogramm bei 60°C gewaschen und bei 1400 UpM geschleudert. Als Waschtensid wurden dabei 36 g eines Flüssigwaschmittels der Marke "Spee Feincolor" von der Firma Henkel dosiert. Es wurden insgesamt 2 Waschzyklen von jeweils 90 Minuten Dauer ohne Zwischentrocknung durchgeführt. Anschließend wurde die Ware mindestens 12 Stunden im Klimaraum bei 23°C und 60 % Luftfeuchtigkeit getrocknet und klimatisiert. Die Warenmuster wurden dann erneut einem Weichgriffvergleich unterzogen.

### Bestimmung des Weichgriffs (Griffbewertung):

Da der Weichgriff von Textilien stark dem subjektiven Empfinden der Testpersonen unterliegt, kann nur eine Standardisierung der Randbedingungen, nicht aber der Bewertung erreicht werden. Um trotzdem eine Reproduzierbarkeit zu gewährleisten, wurden die ausgerüsteten Muster hinsichtlich ihres Weichgriffs beurteilt und in eine Rangfolge gebracht. Dazu wurden von 10 Personen in Abhängigkeit der Anzahl n der getesteten Muster 1 bis n Punkte vergeben, wobei n Punkte für das weichste Muster und 1 Punkt für das am wenigsten weich ausgerüstete Muster vergeben wurden. Das unausgerüstete Referenzmuster erhielt 0 Punkte. Die Griffbewertung eines Musters errechnet sich somit als Mittelwert der jeweils auf dieses Muster entfallenen Punkte.

### Bestimmung der Tropfeneinsinkzeit:

Das ausgerüstete Muster wurde nach der Ausrüstung mindestens 12 Stunden zur Akklimatisation in einem Klimaraum bei einer Temperatur von 23°C und einer Luftfeuchtigkeit von 60 % gelagert, dann wurde ein Tropfen entionisiertes Wasser aus einer Höhe von 4 cm auf die gespannte Stoffoberfläche gegeben und die Zeit bestimmt, nach der der Wassertropfen vom Stoff aufgesaugt war. Es wurden fünf Bestimmungen durchgeführt und der Mittelwert gebildet.

In der Tabelle sind die Ergebnisse der mittels Foulardverfahren ausgerüsteten Stoffe zusammengestellt.

**Tabelle :**

| Beispiele | V1 | V2 | V3 | B1 | B2 | B3 | B4 | B5 | B6 | R |
|---|---|---|---|---|---|---|---|---|---|---|
| Tropfeneinsinkzeit Maschenware in s | 4 | 3 | 15 | 2 | 4 | 12 | 25 | 21 | 15 | <1 |
| Tropfeneinsinkzeit Frottierware in s | 7 | 2 | 9 | 3 | 3 | 8 | 8 | 12 | 11 | <1 |
| Weichgriffvergleich Maschenware vor dem Waschen | 1,2 | 1,8 | 2,6 | 4,6 | 4,8 | 6,5 | 6,5 | 8,7 | 8,3 | 0 |
| Weichgriffvergleich Frottierware vor dem Waschen | 1,5 | 1,6 | 2,3 | 4,7 | 5,3 | 6,7 | 5,9 | 8, 6 | 8, 4 | 0 |
| Weichgriffvergleich Maschenware nach dem Waschen | 1, 7 | 1,9 | 3,9 | 3,8 | 4,0 | 6, 6 | 6, 1 | 8,5 | 8,5 | 0 |
| Weichgriffvergleich Frottierware nach dem Waschen | 2,0 | 2,1 | 3,4 | 3,7 | 4,5 | 6,9 | 5,4 | 8,7 | 8,3 | 0 |

In der Tabelle bedeuten V1 - V3 die jeweiligen Vergleichsversuche, B1 - B6 die jeweiligen Beispiele und R die Referenzprobe.

Bei der Maschen- und Frottierware wird der Weichgriff durch die Ausrüstung mit den erfindungsgemäßen Organopolysiloxanen erheblich verbessert - im Gegensatz zu der Ausrüstung gemäß den Vergleichsversuchen- ohne dass die Wasseraufnahme wesentlich verschlechtert wird:
Insbesondere bleibt der verbesserte Weichgriff auch nach dem Waschen erhalten. Die Permanenz des Weichgriffes ist insbesondere durch die Kombination der erfindungsgemäßen Organopolysiloxane (B) mit den Polyaminverbindungen (A) - gemäß den Beispielen 5 und 6 - gegeben.

## Patentansprüche

1. Quaternäre Ammoniumgruppen aufweisende Organopolysiloxane enthaltend Einheiten der allgemeinen Formel
QRₐSiO_{(3-a)/2} (I),
ER_{b}SiO_{(3-b)/2} (II)
und
R_{c}SiO_{(4-c)/2} (III),
wobei
R gleich oder verschieden ist und einen einwertigen, gegebenenfalls halogenierten Kohlenwasserstoffrest mit 1 bis 18 Kohlenstoffatomen bedeutet,
E einen einwertigen SiC-gebundenen organischen Rest mit 3 bis 18 Kohlenstoffatomen, der eine Epoxygruppe enthält, bedeutet,
Q einen einwertigen SiC-gebundenen organischen Rest bedeutet, in dem eine quaternäre Ammoniumgruppe über eine ringgeöffnete Epoxygruppe an ein Siliciumatom gebunden ist,
a gleich 0, 1 oder 2 ist,
b gleich 0, 1 oder 2 ist und
c gleich 0, 1, 2 oder 3 ist,
mit der Maßgabe, dass die Organopolysiloxane jeweils mindestens eine Einheit der Formel (I) und (II) enthalten und das Verhältnis der Reste Q/E durchschnittlich im Bereich von 0,2 bis 100, vorzugsweise 0,5 bis 20, bevorzugt 1 bis 10, liegt.

2. Quaternäre Ammoniumgruppen aufweisende Organopolysiloxane nach Anspruch 1, **dadurch gekennzeichnet, dass** es solche der allgemeinen Formel
A_{d}R_{3-d}SiO(SiR₂O)ₒ(SiRAO)ₚSiR_{3-d}A_{d} (V)
sind, wobei A entweder E oder Q bedeutet, wobei das Verhältnis Q/E durchschnittlich im Bereich von 0,2 bis 100 liegt,
d gleich 0 oder 1, vorzugsweise 0, ist
o gleich 0 oder eine ganze Zahl von 1 bis 3000, vorzugsweise 10 bis 1000, ist und
p gleich eine ganze Zahl von 2 bis 100, vorzugsweise 2 bis 20 ist.

3. Verfahren zur Herstellung von quaternäre Ammoniumgruppen aufweisenden Organopolysiloxane
durch Umsetzung von Epoxygruppen aufweisenden Organopolysiloxanen (1) enthaltend Einheiten der Formel
ER_{b}SiO_{(3-b)/2} (II)
und
R_{c}SiO_{(4-c)/2} (III),
wobei R, E, b und c die in Anspruch 1 dafür angegebene Bedeutung haben,
mit tertiären Aminen (2), die mindestens eine Struktureinheit der allgemeinen Formel
R¹₂N- (IV)
enthalten, wobei R¹ eine Alkylgruppe mit 1 bis 6 Kohlenstoffatomen bedeutet,
in Gegenwart von Säuren (3),
mit der Maßgabe, dass die Summe aller Struktureinheiten der Formel (IV) kleiner ist als die Summe aller Einheiten der Formel (II) und
dass die molare Menge der zur Neutralisation des Reaktionsgemisches eingesetzten Säuren (3) gleich oder größer der molare Menge an basischen Struktureinheiten (IV) der Amine (2) ist.

4. Verfahren nach Anspruch 3, **dadurch gekennzeichnet, dass** die tertiären Amine (2) in Mengen von 0,15 bis 0,99 Mol Struktureinheit (IV) je Mol Epoxygruppe in den Organopolysiloxanen (1) eingesetzt werden.

5. Formulierungen enthaltend
(A) mindestens zwei Aminogruppen aufweisende Polyaminoverbindungen und
(B) quaternäre Ammoniumgruppen aufweisende Organopolysiloxane nach Anspruch 1 oder 2 oder hergestellt nach Anspruch 3 oder 4.

6. Formulierungen nach Anspruch 5, **dadurch gekennzeichnet, dass** die Verbindungen (A) und (B) in Form von wässrigen Lösungen oder wässrigen Emulsionen eingesetzt werden.

7. Verfahren zur Behandlung von faserartigen Substraten, vorzugsweise textilen Flächengebilden, mit einer Formulierung nach Anspruch 5 oder 6, wobei vor der Behandlung Mischungen aus Verbindungen (A) und (B) hergestellt werden.

8. Verfahren zur Behandlung von faserartigen Substraten, vorzugsweise textilen Flächengebilden, mit einer Formulierung nach Anspruch 5 oder 6, **dadurch gekennzeichnet, dass**
die Behandlung zuerst mit Verbindungen (A)
und dann anschließend die Behandlung mit Verbindungen (B) erfolgt.

9. Verfahren nach einem der Ansprüche 5 bis 8, **dadurch gekennzeichnet, dass** die Verbindungen (A) in Mengen von 0,1 bis 10 Mol Aminogruppe, bezogen auf 1 Mol Epoxygruppen in Verbindungen (B), eingesetzt werden.

## Claims

1. Organopolysiloxanes comprising quaternary ammonium groups and comprising units of the general formula
QRₐSiO_{(3-a)/2} (I),
ER_{b}SiO_{(3-b)/2} (II)
and
R_{c}SiO_{(4-c)/2} (III),
where
R is identical or different and represents a monovalent, optionally halogenated hydrocarbyl radical having 1 to 18 carbon atoms,
E represents a monovalent SiC-bonded organic radical having 3 to 18 carbon atoms which comprises an epoxy group,
Q represents a monovalent SiC-bonded organic radical in which a quaternary ammonium group is bonded to a silicon atom via a ring-opened epoxy group,
a is 0, 1 or 2,
b is 0, 1 or 2, and
c is 0, 1, 2 or 3,
with the proviso that the organopolysiloxanes each comprise at least one unit of formula (I) and (II) and the Q/E ratio is on average in the range from 0.2 to 100, preferably in the range from 0.5 to 20 and more preferably in the range from 1 to 10.

2. Organopolysiloxanes comprising quaternary ammonium groups according to Claim 1, **characterized in that** they are of the general formula
A_{d}R_{3-d}SiO(SiR₂O)ₒ(SiRAO)ₚSiR_{3-d}A_{d} (V)
where A represents either E or Q provided the Q/E ratio is on average in the range from 0.2 to 100,
d is 0 or 1, preferably 0,
o is 0 or an integer from 1 to 3000, preferably from 10 to 1000, and
p is an integer from 2 to 100, preferably from 2 to 20.

3. Process for preparing organopolysiloxanes comprising quaternary ammonium groups by reacting epoxy-containing organopolysiloxanes (1) comprising units of the formula
ER_{b}SiO_{(3-b)/2} (II)
and
R_{c}SiO_{(4-c)/2} (III),
where R, E, b and c are each as defined in Claim 1,
with tertiary amines (2) comprising at least one structural unit of the general formula
R¹₂N- (IV)
where R¹ represents an alkyl group having 1 to 6 carbon atoms,
in the presence of acids (3),
with the proviso that the sum total of all structural units of formula (IV) is less than the sum total of all units of formula (II) and
that the molar amount of the acids (3) which are used for neutralizing the reaction mixture is not less than the molar amount of basic structural units (IV) of said amines (2).

4. Process according to Claim 3, **characterized in that** said tertiary amines (2) are used in amounts of 0.15 to 0.99 mol of structural unit (IV) per mole of epoxy group in said organopolysiloxanes (1).

5. Formulations comprising
(A) polyamino compounds comprising two or more amino groups, and
(B) organopolysiloxanes comprising quaternary ammonium groups according to Claim 1 or 2 or obtained according to Claim 3 or 4.

6. Formulations according to Claim 5, **characterized in that** said compounds (A) and (B) are used in the form of aqueous solutions or aqueous emulsions.

7. Process for treatment of fibrous substrates, preferably textile sheet materials, with a formulation according to Claim 5 or 6, which process comprises preparing mixtures of compounds (A) and (B) prior to the treatment.

8. Process for treatment of fibrous substrates, preferably textile sheet materials, with a formulation according to Claim 5 or 6, **characterized in that** the treatment is effected first with compounds (A) and then subsequently the treatment with compounds (B) is effected.

9. Process according to any one of Claims 5 to 8, **characterized in that** said compounds (A) are used in amounts of 0.1 to 10 mol of amino group, based on 1 mol of epoxy groups in compounds (B).

## Revendications

1. Organopolysiloxanes présentant des groupes d'ammonium quaternaire, contenant des unités de formule générale
QRₐSiO_{(3-a)/2} (I),
ER_{b}SiO_{(3-b)/2} (II)
et
R_{c}SiO_{(4-c)/2} (III),
où
R est identique ou différent et signifie un radical hydrocarboné monovalent, le cas échéant halogéné, comprenant 1 à 18 atomes de carbone,
E signifie un radical organique monovalent, lié par SiC, comprenant 3 à 18 atomes de carbone, qui contient un groupe époxy,
Q signifie un radical organique monovalent, lié par SiC, dans lequel un groupe d'ammonium quaternaire est lié via un groupe époxy dont le cycle est ouvert à un atome de silicium,
a vaut 0, 1 ou 2,
b vaut 0, 1 ou 2 et
c vaut 0, 1, 2 ou 3,
à condition que les organopolysiloxanes contiennent à chaque fois au moins une unité de formule (I) et (II) et que le rapport des radicaux Q/E se situe en moyenne dans la plage de 0,2 à 100, de préférence de 0,5 à 20, préférablement de 1 à 10.

2. Organopolysiloxanes présentant des groupes d'ammonium quaternaire selon la revendication 1, **caractérisés en ce qu'**il s'agit de ceux de formule générale
A_{d}R_{3-d}SiO(SiR₂O)ₒ(SiRAO)ₚSiR_{3-d}A_{d} (V)
où A signifie E ou Q, le rapport Q/E se situant en moyenne dans la plage de 0,2 à 100,
d vaut 0 ou 1, de préférence 0,
o vaut 0 ou un nombre entier de 1 à 3000, de préférence de 10 à 1000, et
p vaut un nombre entier de 2 à 100, de préférence de 2 à 20.

3. Procédé pour la préparation d'organopolysiloxanes présentant des groupes d'ammonium quaternaire par transformation d'organopolysiloxanes (1) présentant des groupes époxy contenant des unités de formule
ER_{b}SiO_{(3-b)/2} (II)
et
R_{c}SiO_{(4-c)/2} (III),
où R, E, b et c présentent la signification indiquée dans la revendication 1, avec des amines tertiaires (2) qui contiennent au moins une unité structurelle de formule générale
R¹₂N- (IV),
R¹ signifiant un groupe alkyle comprenant 1 à 6 atomes de carbone, en présence d'acides (3), à condition que la somme de toutes les unités structurelles de formule (IV) soit inférieure à la somme de toutes les unités de formule (II) et que la quantité molaire des acides (3) utilisés pour la neutralisation du mélange réactionnel soit égale ou supérieure à la quantité molaire des unités structurelles basiques (IV) des amines (2).

4. Procédé selon la revendication 3, **caractérisé en ce que** les amines tertiaires (2) sont utilisées en des quantités de 0,15 à 0,99 mole d'unité structurelle (IV) par mole de groupe époxy dans les organopolysiloxanes (1).

5. Formulations contenant
(A) des composés polyamino présentant au moins deux groupes amino et
(B) des organopolysiloxanes présentant des groupes d'ammonium quaternaire selon la revendication 1 ou 2 ou préparés selon la revendication 3 ou 4.

6. Formulations selon la revendication 5, **caractérisées en ce que** les composés (A) et (B) sont utilisés sous forme de solutions aqueuses ou d'émulsions aqueuses.

7. Procédé pour le traitement de substrats fibreux, de préférence de structures planes textiles, par une formulation selon la revendication 5 ou 6, des mélanges de composés (A) et (B) étant préparés avant le traitement.

8. Procédé pour le traitement de substrats fibreux, de préférence des structures planes textiles, par une formulation selon la revendication 5 ou 6, **caractérisé en ce que** le traitement est d'abord réalisé par des composés (A), puis on réalise le traitement par des composés (B).

9. Procédé selon l'une quelconque des revendications 5 à 8, **caractérisé en ce que** les composés (A) sont utilisés en des quantités de 0,1 à 10 moles de groupes amino par rapport à 1 mole de groupes époxy dans les composés (B).
